# EUROPÄISCHE PATENTANMELDUNG

(11) **EP 0 691 214 A2**
(43) Veröffentlichungstag der Anmeldung: **10.01.1996**
(21) Anmeldenummer: 94120974.4
(22) Anmeldetag: 30.12.1994
(51) Int. Cl.: B42B 4/00

(54) **Förderkette**

(30) Priorität: 08.07.1994 DE 4424110
(71) Anmelder: MASCHINENBAU OPPENWEILER BINDER GmbH & CO., D-71570 Oppenweiler (DE)
(72) Erfinder: Reim, Werner, D-76337 Waldbronn (DE); Streubel, Joachim, D-71522 Backnang (DE)
(74) Vertreter: Finck, Dieter, Dr.-Ing.

(57) **Zusammenfassung**

Die als Rollenkette ausgebildete Förderkette (20) hat spezielle Laschenabschnitte (22), die durch zusätzliche Querbolzen (28) verbunden sind. An diesen Querbolzen (28) können zur Bildung eines Mitnehmers (19) Kontaktabschnitte (29) in unterschiedlicher Ausgestaltung lösbar befestigt werden. Dadurch läßt sich die Förderkette (20) in einfacher Weise an vorgegebene Transportbedingungen anpassen, so daß zusammen mit einer Gegenförderkette (10) immer ein schlupf- und deformationsfreier Transport eines Falzbogens (16) gewährleistet ist.

## Beschreibung

Die Erfindung betrifft eine Förderkette für Bedrucktstoffe verarbeitende Maschinen, insbesondere für den Transport von Falzbogen durch Arbeitsstationen einer Fadensiegelmaschine, mit durch Bolzen und Hülsen verbundenen Kettenlaschen, wobei die Hülsen drehbare Rollen tragen können, und mit Mitnehmern, von denen jeder zwei in die Förderkette integrierte Laschenabschnitte und einen diese verbindenden Kontaktabschnitt aufweist.

In den Fadensiegelmaschinen werden die Falzbogen mittels einer oberen und einer unteren Förderkette transportiert, die jeweils Mitnehmer tragen, die die Falzbogen mittig fassen und durch die Funktionsbereiche der Fadensiegelmaschine, nämlich Fadeneinstechen, Fadenkontrolle und Ansiegeln transportieren. Die Falzbogen sind dabei zwischen den Mitnehmern der Förderketten so fest eingespannt, daß ihr schlupffreies Transportieren gewährleistet ist, was einen verzögerungsfreien und lagestabilen Transport der Falzbogen ermöglicht.

Die Mitnehmer der unteren Förderkette, die in der Regel als Rollenkette ausgebildet ist, sind in diese als Kraftübertragungsglieder integriert und einstückig ausgebildet, d.h. ihre Laschenabschnitte und ihr Kontaktabschnitt bilden ein Stück und haben im Querschnitt im wesentlichen die Form eines auf dem Kopf stehenden U. Ein Auswechseln der Mitnehmer ohne Zerstörung der Kette ist nicht möglich. Die an den zu transportierenden Falzbogen angreifenden Kontaktflächen bzw. Mitnahmeflächen der Mitnehmer bestehen entsprechend der Kettenqualität aus Metall und müssen durch zusätzliche mechanische Bearbeitung der Form und Lageabweichungen der oberen Förderkette angepaßt werden, um einen flächigen Kontakt mit den Falzbogen zu gewährleisten.

Der Kraftschluß zwischen der oberen und unteren Förderkette erfolgt durch Druckfedern, mit denen beispielsweise die untere Förderkette gegen die obere Förderkette vorgespannt wird. Durch diese Vorspannung ergeben sich relativ hohe Flächenpressungen, wodurch die Mitnehmerflächen aus Metall bei empfindlichen Papieren Deformierungen verursachen, die sich als glänzende Abzeichnungen optisch darstellen und die Qualität des gesiegelten Produkts nachteilig beeinflussen.

Die der Erfindung zugrunde liegende Aufgabe besteht nunmehr darin, die Förderkette der eingangs genannten Art so auszubilden, daß sich mit ihr im Zusammenwirken mit einer entsprechend gestalteten Gegenförderkette anpaßbar an die jeweils zu fördernden Bedrucktstoffe, beispielsweise Falzbogen, diese schlupffrei durch die Maschine, beispielsweise die Fadensiegelmaschine, transportieren lassen, ohne daß Verformungen der Oberfläche des Bedrucktstoffs entstehen.

Diese Aufgabe wird ausgehend von der Förderkette der eingangs genannten Art dadurch gelöst, daß die Laschenabschnitte durch wenigstens zwei zusätzliche im Abstand von den Kettenlaschen vorgesehene Querbolzen verbunden sind und daß der Kontaktabschnitt auf seiner den Kettenlaschen zugewandten Seite wenigstens zwei Aussparungen für eine lösbare Verbindung mit den Querbolzen aufweist.

Bei der erfindungsgemäßen Förderkette in Form einer Rollenkette sind in diese die Laschenabschnitte integriert, auf denen die externen Mitnehmer auswechselbar befestigt sind, wofür die Laschenabschnitte zur Befestigung eines jeden Mitnehmers zwei zusätzliche Querbolzen aufweisen. Die Mitnehmer sind so gestaltet, daß sie ohne Demontage von Kettenteilen aufgesteckt werden können und formschlüssig fixiert sind.

Dafür ist zweckmäßigerweise der Kontaktabschnitt im Schnappsitz auf dem Querbolzen gehalten. Dieses Aufschnappen der Kontaktfläche des Mitnehmers wird durch die Elastizität des Materials zur Befestigung und die besondere konstruktive Gestaltung der Aussparungen gewährleistet. Dadurch ist es möglich, die Kontaktabschnitte jederzeit den Erfordernissen entsprechend auszuwechseln.

Vorteilhafterweise weist der Kontaktabschnitt eine Kontaktfläche aus einem elastischen Material mit hohem Reibwert auf. Dadurch kann die Vorspannung der unteren Förderkette wesentlich reduziert werden, so daß bei verringerter Flächenpressung am Falzbogen eine optimale schlupffreie Mitnahme erreicht wird, wobei Deformierungen der Oberfläche des Bedrucktstoffs bzw. des Falzbogens durch den Kontaktabschnitt des Mitnehmers ausgeschlossen werden. Außerdem entfällt eine eventuelle Bearbeitung zur Anpassung an die Form- und Lageabweichung der Gegenförderkette.

Der Kontaktabschnitt und die Laschenabschnitte können aus gleichen oder unterschiedlichen Materialien hergestellt werden. Die Kontaktabschnitte können einlagig oder mehrlagig aus unterschiedlichen Materialien ausgebildet sein.

Mit der erfindungsgemäßen Förderkette können somit im Zusammenwirken mit einer weiteren Fördereinrichtung, beispielsweise einer gleichen oder ähnlichen Förderkette, Falzbogen, die zwischen den beiden Förderketten eingespannt sind, schlupffrei und bei minimaler Flächenpressung schonend durch eine Bedrucktstoff verarbeitende Maschine, wie eine Fadensiegelmaschine, transportiert werden.

Anhand der Zeichnung wird ein Ausführungsbeispiel der Erfindung näher erläutert. Es zeigt
- Fig. 1: in einer teilweise geschnittenen Seitenansicht ein Längenstück der Förderkette und
- Fig. 2: einen Querschnitt durch die Förderkette von Fig.1.

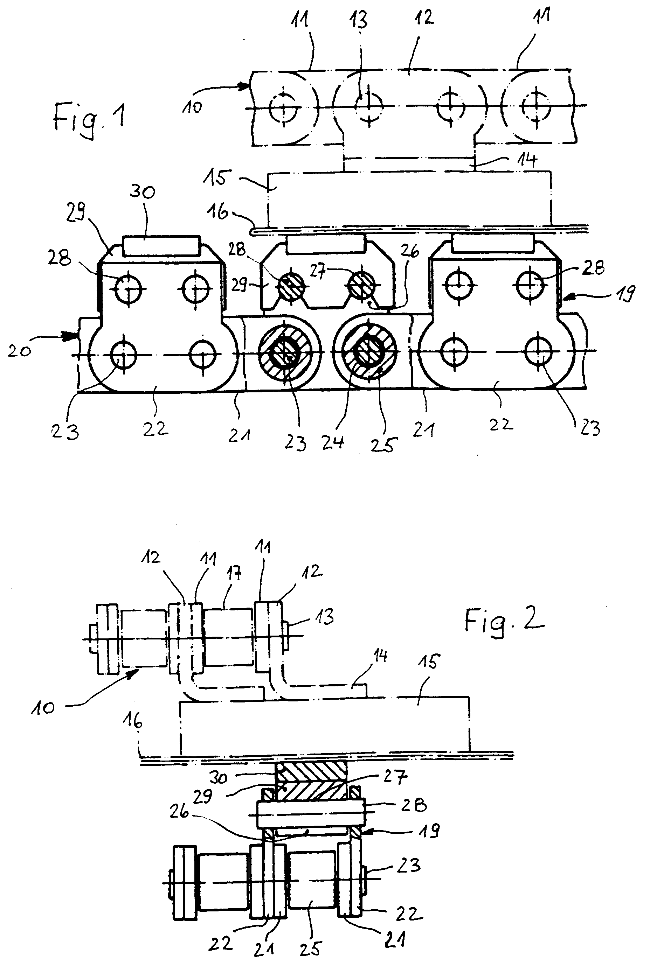

Die in Fig. 1 und 2 gezeigte Transporteinrichtung besteht aus einer oberen Förderkette 10 und aus einer unteren Förderkette 20, zwischen denen ein Falzbogen 16 eingespannt durch die Arbeitsstationen einer nicht gezeigten Fadensiegelmaschine transportiert wird.

Die obere Förderkette 10 ist in herkömmlicher Weise ausgeführt. Sie besteht aus Kettenlaschen 11 und integrierten Laschenabschnitten 12, die durch Bolzen 13, nicht gezeigte Hülsen und Rollen 17 in bekannter Weise zu einer Rollenkette zusammengeschlossen sind, wie sie in Fig. 1 und 2 gezeigt ist. Die Laschenabschnitte 12 sind nach einer Seite rechtwinklig abgebogen und bilden Halteabschnitte 14 zum Tragen eines Kontaktabschnittes in Form einer Platte 15.

Die untere Förderkette 20 besteht aus Kettenlaschen 21 und in die Förderkette integrierten Laschenabschnitten 22, die jeweils durch Bolzen 23 mit Hülsen 24 und Rollen 25 in bekannter Weise zu einer Rollenkette zusammengeschlossen sind.

Wie in Fig. 2 gezeigt ist, sind die Laschenabschnitte 22 oberhalb der Kettenlaschen 21 durch zwei in Kettenförderrichtung im Abstand angeordnete Querbolzen 28 verbunden, wobei die Querbolzen 28 durch entsprechende Öffnungen in den Laschenabschnitten 22 hindurchgehen und darin im Preßsitz oder auf andere Weise fixiert sind.

Es sind Kontaktabschnitte 29 vorgesehen, deren Erstreckung in Richtung der Querbolzen 28 so bemessen ist, daß sie zwischen die gegenüberliegenden Laschenabschnitte 22 eingeführt werden können. Auf seiner den Kettenlaschen 21 zugewandten Seite hat jeder Kontaktabschnitt 29 zwei in Kettenförderrichtung im Abstand angeordnete Aussparungen 26, die sich quer zur Kettenförderrichtung erstrecken und sich ausgehend von der den Kettenlaschen 21 zugewandten Seite des Kontaktabschnitts 29 verjüngen und in einen - zylindrischen Abschnitt 27 übergehen, dessen Durchmesser größer ist als die kleinste Abmessung der Verjüngung, was aus Fig. 1 ersichtlich ist. Die Abstände zwischen den Aussparungen 26 entsprechen den Abständen der Querbolzen 28 so, daß die Querbolzen 28 in die Aussparungen 26 eingeführt und in deren zylindrischem Abschnitt 27 im Schnappsitz gehalten werden können. Dies wird dadurch erreicht, daß der Kontaktabschnitt 29 auf die Querbolzen 28 aufgedrückt wird, wodurch sich die Wände der Aussparungen 26 elastisch voneinander entfernen und die Querbolzen 28 in die zylindrischen Abschnitte 27 der Aussparungen 26 einschnappen können. Dieser Schnappsitz bildet eine lösbare Fixierung des Kontaktabschnitts 29 auf den Querbolzen 28 und somit bezüglich der zugeordneten Laschenabschnitte 22.

Der Abstand zwischen dem Mittelpunkt des zylindrischen Abschnitts 27 der Aussparung 26 und der den Kettenlaschen 21 zugewandten Fläche des Kontaktabschnitts 29 ist so bemessen, daß, wenn der Kontaktabschnitt 29 im Schnappsitz auf die Querbolzen 28 aufgesetzt ist, der Kontaktabschnitt 29 die Kettenlaschen 21 nicht berührt.

Bei dem gezeigten Ausführungsbeispiel wird die Kontaktfläche 30 des Kontaktabschnitts 29 von einem Einsatz aus einem elastischen Material mit hohem Reibwert gebildet.

Gemäß Fig. 1 und 2 bilden somit jeweils zwei gegenüberliegende Laschenabschnitte 22 mit den beiden Querbolzen 28 und dem darauf im Schnappsitz gehaltenen Kontaktabschnitt 29 einen Mitnehmer 19 der unteren Förderkette 20.

Wie aus Fig. 1 und 2 zu ersehen ist, wird der Falzbogen 16 eingespannt zwischen der den Kontaktabschnitt bildenden Platte 15 der oberen Förderkette 10 und den Kontaktflächen 30 der Kontaktabschnitte 29 der Mitnehmer 19 der unteren Förderkette 20 transportiert, wobei durch entsprechende Auswahl der Kontaktabschnitte 29 ein schlupffreier Transport des Falzbogens 16 gewährleistet ist, ohne daß an den Flächen des Falzbogens 16 Deformierungen durch die Kontaktflächen 30 auftreten.

## Patentansprüche

1. Förderkette für Bedrucktstoffe verarbeitende Maschinen, insbesondere für den Transport von Falzbogen (16) durch Arbeitsstationen einer Fadensiegelmaschine,
- mit durch Bolzen (23) und Hülsen (24) verbundenen Kettenlaschen (21), wobei die Hülsen (24) drehbare Rollen (25) tragen können, und
- mit Mitnehmern (19), von denen jeder zwei in die Förderkette (10, 20) integrierte Laschenabschnitte (12, 22) und einen diese verbindenden Kontaktabschnitt (29) aufweist,
dadurch gekennzeichnet,
- daß die Laschenabschnitte (22) durch wenigstens zwei zusätzliche, im Abstand von den Kettenlaschen (21) vorgesehene Querbolzen (28) verbunden sind und
- daß der Kontaktabschnitt (29) auf seiner den Kettenlaschen (21) zugewandten Seite wenigstens zwei Aussparungen (26) für eine lösbare Verbindung mit den Querbolzen (28) aufweist.

2. Förderkette nach Anspruch 1, dadurch gekennzeichnet, daß der Kontaktabschnitt (29) im Schnappsitz auf den Querbolzen (28) gehalten ist.

3. Förderkette nach Anspruch 1 oder 2, dadurch gekennzeichnet, daß der Kontaktabschnitt (29) eine Kontaktfläche (30) aus einem elastischen Material mit hohem Reibwert aufweist.
